# FASCICULE DE BREVET EUROPEEN

(11) **EP 2 294 381 B1**
(45) Date de publication et mention de la délivrance du brevet: **02.11.2016**
(21) Numéro de dépôt: 09784251.2
(22) Date de dépôt: 07.07.2009
(51) Int. Cl.: G01N 3/10, E21B 47/12, E21B 21/08

(54) **CELLULE TRIAXIALE D'ESSAIS DE GÉOMATÉRIAUX SOUS PRESSION ET SOUS TRACTION**
DREIACHSIGE ZELLE ZUM TESTEN VON GEOMATERIALIEN IM DRUCK- UND SPANNUNGSZUSTAND
TRIAXIAL CELL FOR THE TESTING OF GEOMATERIALS IN COMPRESSION AND IN TENSION

(30) Priorité: 07.07.2008 FR 0803851
(43) Date de publication de la demande: 16.03.2011
(73) Titulaire: UNIVERSITE DES SCIENCES ET TECHNOLOGIES DE LILLE, 59655 Villeneuve d'Ascq Cedex (FR)
(72) Inventeur: SECQ, Jean, F-59655 Villeneuve d'Ascq (FR)
(74) Mandataire: Boubal, Denis Henri Jacques
(86) Numéro de dépôt international: PCT/FR2009/000836
(87) Numéro de publication internationale: WO 2010/004135

(56) Documents cités:
- EP-A- 0 241 715
- WO-A-2004/074762
- FR-A- 2 734 364
- FR-A- 2 746 920
- JP-A- 59 125 039
- US-A- 5 095 757

## Description

L'invention est relative à une cellule triaxiale d'essais de géomatériaux, tels que notamment des roches, sols, se présentant sous la forme d'échantillons notamment de forme cylindrique.

Ces échantillons de forme cylindrique peuvent être soumis à différentes conditions de pression, de chargement, de température et de drainage. Afin de contrôler ces différents paramètres, la cellule peut être instrumentée de capteurs de pression, de température, de déplacements internes ou externes et de jauges de contrainte. Les contraintes de pression peuvent être axiales, générées sous l'action d'un piston hydraulique et radiales sur la face latérale de l'échantillon sous l'action d'un fluide en pression.

A cet effet, on connaît des documents US3975950, FR2734364 ou JP5871432 une cellule triaxiale d'essai qui nécessite d'être placée dans une machine d'essais agissant comme une presse, généralement installée à poste fixe dans les laboratoires.

Afin de rendre autonome une telle cellule, on connaît de la publication BROWN S.F. AUSTIN G. AND OVERY, R.F. « an instrument triaxial cell for cyclic loading of clays » (GEOTECHNICAL TESTING JOURNAL GJJODJ VOL 3 N° 4, Décembre 1980, pages 145 à 152) ou encore du document FR 2.663.123 une cellule pourvue d'un module démontable qui vient coiffer la cellule et équipée de son propre piston hydraulique apte à générer la contrainte axiale nécessaire à l'essai. Cette cellule autonome permet ainsi le test d'échantillon sur site, évitant ainsi le transport des échantillons du site de prélèvement jusqu'au laboratoire.

Les cellules précitées, qu'elles soient à poste fixe ou autonomes présentent un corps comportant une cavité à l'intérieur de laquelle trouve place l'échantillon. La cavité réserve entre la paroi latérale du corps et celle de l'échantillon une chambre périphérique reliée à un circuit de mise en pression et de vidange contrôlé. Un fluide peut être injecté afin d'exercer une contrainte sur la surface latérale de l'échantillon.

Dans le corps, l'échantillon est positionné entre un plateau inférieur d'une embase et un plateau supérieur qui reçoit la poussée nécessaire à la contrainte axiale d'un piston. Ce piston est guidé en translation dans un alésage à travers la paroi supérieure du corps qui peut être monobloc avec la paroi latérale du corps ou encore se présenter sous la forme d'un couvercle fixé de manière démontable, généralement vissé à des tirants.

En pratique, dans une cellule fermée par un couvercle, lors de la préparation de la phase d'essai, l'échantillon peut être enveloppé dans une membrane qui épouse sa paroi latérale et être positionné de telle façon à reposer sur le plateau inférieur. L'échantillon est recouvert par la paroi latérale du corps, le couvercle et son piston venant alors fermer la cellule, notamment fixée par vissage.

Dans de telle cellule, l'échantillon repose ainsi simplement sur le plateau inférieur et n'est pas solidaire du plateau supérieur. De même, le plateau supérieur n'est pas solidaire au piston du couvercle de sorte qu'il est seulement possible de travailler en compression sur l'échantillon. Il est à noter que le même problème se pose pour une cellule dont la paroi supérieure du corps est monobloc avec sa paroi latérale.

Cependant, il peut être nécessaire de contraindre l'échantillon axialement en traction, la difficulté réside alors à trouver un moyen de solidariser l'échantillon en traction lorsque le plateau supérieur et inférieur, ainsi que le piston, logés à l'intérieur du corps ne sont plus accessibles.

Le but de la présente invention est de pallier les inconvénients précités en proposant, selon l'énoncé de la revendication 1, une cellule triaxiale d'essai de géomatériaux permettant d'exercer sur l'échantillon une contrainte de traction notamment exercée selon l'axe longitudinal de l'échantillon.

Un autre but de l'invention est de proposer une telle cellule dont l'alignement du montage de l'échantillon est facilité.

D'autres buts et avantages apparaîtront au cours de la description qui va suivre qui n'est donnée qu'à titre indicatif et qui n'a pas pour but de la limiter.

L'invention concerne une cellule triaxiale d'essai de géomatériaux sur des échantillons, par exemple de roche, de sols, ou de matériaux fabriqués comprenant :
- au moins un piston pour soumettre un échantillon à une contrainte dirigée selon l'axe longitudinal de l'échantillon,
- des moyens hydrauliques pour soumettre la paroi latérale de l'échantillon à une contrainte, sous la pression d'un fluide,
- une chambre d'essai, étanche, à l'intérieur de laquelle est introduit l'échantillon, et un circuit de mise sous tension et de vidange contrôlé de ladite chambre d'essai avec un fluide, dit de pression.

Selon l'invention :
- ladite cellule présente des moyens d'assujettissement de l'échantillon sous traction, prévus pour le solidariser de manière amovible entre deux pièces d'attache, destinées à s'écarter ou se rapprocher l'une de l'autre sous l'action dudit au moins un piston, afin de soumettre ledit échantillon à la contrainte d'axe longitudinal ou au contraire de le décharger et,
- lesdits moyens d'assujettissement comprennent au moins, d'une part, deux demi-coques, situées dans ladite chambre d'essai, solidaires respectivement de deux éléments assujettis l'un à l'autre de manière amovible, lesdites deux demi-coques étant aptes à être mises en contact lorsque les pièces d'attache sont rapprochées de telle façon à constituer une coque étanche dont le volume interne constitue une chambre de mise en dépression, la surface externe de ladite coque étanche subissant, notamment le cas échéant, l'action du fluide de pression lors de la mise en pression de ladite chambre d'essai, ou au moins l'action de la pression atmosphérique et d'autre part, un circuit pour la mise sous vide de ladite chambre de mise en dépression.

Selon divers modes de réalisation :
- les deux demi-coques présentent respectivement deux bords de contour fermés destinés à coopérer mutuellement de manière étanche, le cas échéant via un joint :
- l'échantillon est cylindrique, le diamètre maximal de ladite coque étant supérieur au diamètre dudit échantillon ;
- l'une des demi-coques est assujettie à l'une des pièces d'attache qui est constituée par ledit au moins un piston, l'autre des demi-coques étant assujettie directement ou indirectement par collage à l'une des extrémités de l'échantillon ;
- l'une des demi-coques est assujettie à l'une des pièces d'attache en liaison rigide avec le bâti de la machine, l'autre demi-coque correspondante étant assujettie directement ou indirectement par collage à l'une des extrémités de l'échantillon ;
- ladite cellule présente quatre demi-coques aptes à coopérer deux à deux entre elles, et dans laquelle d'une part, l'une des demi-coques est assujettie à l'une des pièces d'attache qui est constituée par ledit au moins un piston, la demi-coque correspondante étant assujettie directement ou indirectement par collage à l'une des extrémités de l'échantillon et, d'autre part, l'une des autres demi-coques est assujettie à l'autre pièce d'attache en liaison rigide avec le bâti de la cellule, la demi-coque correspondante étant assujettie directement ou indirectement par collage à l'autre des extrémités de l'échantillon,
- la cellule présente des moyens de drainage pour soumettre l'échantillon au passage longitudinal d'un fluide de drainage, et comprend au moins un circuit pour la circulation d'un fluide de drainage ;
- l'une au moins des demi-coques est en liaison rigide avec une embase drainante comportant un alésage pour le passage d'un fluide de drainage ;
- l'échantillon est contraint axialement entre deux pièces d'attache qui sont constituées respectivement par une embase inférieure et ledit piston ;
- la cellule comprend un corps présentant une cavité formant ladite chambre d'essai, à l'intérieur de laquelle est logé l'échantillon, ledit corps réservant entre sa paroi latérale et celle de l'échantillon une chambre périphérique reliée audit circuit de mise en pression et de vidange contrôlée ;
- ledit piston est guidé dans un alésage de la paroi supérieure du corps, laquelle paroi fait partie intégrante du corps ou se présente sous la forme d'un couvercle rapporté et fixé de manière démontable ;
- ledit alésage de la partie supérieure du corps comprend une section de guidage du piston, une section sur lequel alésage est de plus grand diamètre, ajusté pour coulisser de manière étanche avec une collerette du piston en délimitant deux chambres annulaires, respectivement inférieure et supérieure, un canal permettant l'introduction d'un fluide dans la chambre annulaire inférieure afin d'exercer une poussée sur ledit piston, tendant à étirer l'échantillon ;
- le piston peut présenter un canal de compensation qui met en communication le fluide dit de pression de la chambre d'essai et celui de ladite chambre annulaire supérieure.

L'invention sera mieux comprise à la lecture de la description suivante accompagnée des dessins en annexe par lesquels :
- la figure 1 est une vue de coupe d'une cellule triaxiale d'essai de géomatériaux notamment autonome et polyvalente, conforme à l'invention selon un mode de réalisation,
- la figure 2 est une vue de l'échantillon et des moyens d'assujettisement de l'échantillon sous traction illustré à la figure 1.

L'invention concerne une cellule triaxiale d'essai de géomatériaux sur des échantillons, par exemple, de roche, de sols ou de matériaux fabriqués, comprenant :
- au moins un piston 2 pour soumettre un échantillon 3 à une contrainte dirigée selon l'axe longitudinal de l'échantillon,
- des moyens hydrauliques pour soumettre la paroi latérale de l'échantillon 3 à une contrainte notamment radiale, sous la pression d'un fluide, le cas échéant au travers d'une enveloppe 4 élastique enveloppant la paroi latérale de l'échantillon 3,
- lesdits moyens hydrauliques comprennent au moins une chambre d'essai 5, étanche, à l'intérieur de laquelle est introduit l'échantillon et un circuit de mise sous pression et de vidange contrôlée de ladite chambre d'essai avec un fluide, dit de pression.

Selon l'invention, la cellule comprend des moyens 7 d'assujettissement de l'échantillon sous traction, prévu pour le solidariser de manière amovible entre deux pièces d'attache 8, 9 destinées à s'écarter ou se rapprocher l'une de l'autre sous l'action dudit au moins un piston, afin de soumettre ledit échantillon à ladite contrainte d'axe longitudinal ou au contraire de le décharger.

Selon l'invention, les moyens 7 d'assujettissement comprennent au moins, d'une part, deux demi-coques 10, 11 ; 12, 13 situées dans ladite chambre d'essai 5, solidaires respectivement de deux éléments à assujettir l'un à l'autre de manière amovible, lesdites deux demi-coques étant aptes à être mises en contact lorsque lesdites pièces d'attache 8, 9 sont rapprochées de telle façon à constituer une coque étanche dont le volume interne constitue une chambre de mise en dépression. Les moyens 7 d'assujettissement comprennent au moins, d'autre part, un circuit 15 pour la mise sous vide de ladite chambre d'essai 14 de mise en dépression.

Ledit assujettissement, conforme à l'invention, est donc obtenu par la différence de pression entre l'extérieur et l'intérieur de la coque, ce qui maintient les deux demi-coques 10, 11 ; 12, 13 l'une contre l'autre selon un effort supérieur à l'effort de traction.

Dans le cas d'un essai de traction simple, la différence de pression est causée par la pression atmosphérique qui s'exerce sur la surface externe de la coque étanche et la pression à l'intérieur de la coque inférieure à la pression atmosphérique.

Dans le cas d'un essai triaxial, la surface externe de ladite coque étanche subit l'action du fluide en pression lors de la mise en pression de la chambre d'essai. La différence de pression est assurée par la pression du fluide de pression qui s'exerce sur la surface externe de la coque étanche et la pression à l'intérieur de la coque, inférieure à la pression atmosphérique.

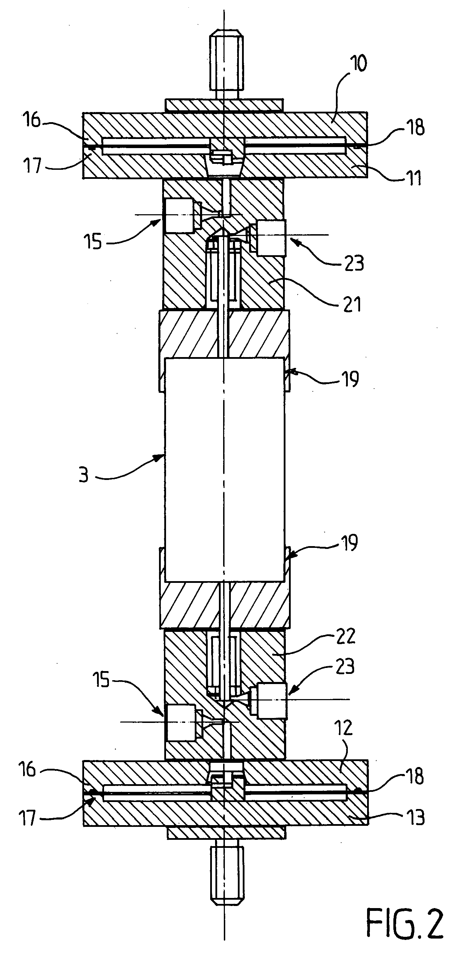

Telles qu'illustrées à la figure 2, les deux demi-coques 10, 11 ; 12, 13 présentent respectivement deux bords 16, 17, de contour fermé destinés à coopérer mutuellement de manière étanche, le cas échéant, via un joint 18.

Afin de permettre un assujettissement important desdites coques et ainsi des essais de traction de forte intensité, le diamètre maximal de ladite coque est supérieur au diamètre de l'échantillon, notamment supérieur au diamètre du piston 2.

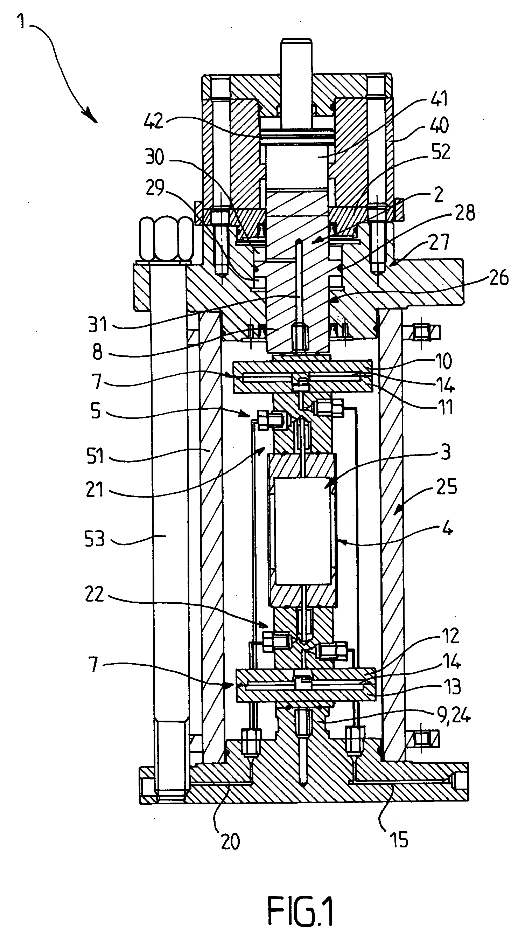

Nous décrivons par la suite en détail l'exemple illustré aux figures 1 et 2 qui concerne une cellule triaxiale d'essais dite polyvalente comprenant notamment un module venant coiffer ladite cellule afin de la rendre autonome.

Toutefois, l'invention n'est pas limitée à ce mode de réalisation et peut être ainsi une cellule qui nécessite obligatoirement d'être couplée à une machine d'essais d'un laboratoire pour son fonctionnement.

En se reportant à la figure 1, la cellule comprend un corps 25 dont la cavité forme la chambre d'essai 5 et à l'intérieur duquel est logé l'échantillon 3. Le corps 25 réserve entre sa paroi latérale et celle de l'échantillon 3 une chambre périphérique reliée à un circuit de mise en pression et de vidange contrôlée (non illustré).

Ce corps 25 est constitué par trois éléments démontables, fixés par vissage à l'aide de tirants 53, à savoir une embase 50, une paroi cylindrique latérale 51 et un couvercle 27. Ce dernier comprend un alésage 26 pour le guidage d'un piston 2 permettant d'exercer sur l'échantillon la contrainte axiale de traction, voire de compression.

L'alésage 26 de la paroi supérieure du corps 25, notamment du couvercle 27, comprend une section de guidage dudit piston 2 et une section sur laquelle l'alésage est de plus grand diamètre ajusté pour coulisser de manière étanche avec une collerette 28 dudit piston, notamment via un joint en délimitant deux chambres annulaires 29, 30, respectivement inférieure et supérieure.

Un canal (non illustré) peut permettre notamment l'introduction d'un fluide dans la chambre annulaire inférieure 29 afin d'exercer une poussée sur le piston 2 tendant à étirer l'échantillon 3.

Le piston 2 peut présenter, tel qu'illustré, un canal 31 de compensation qui met en communication le fluide de pression de la chambre d'essai 5 et celui de la chambre annulaire supérieur 30. La surface radiale supérieure de la collerette 28 est alors égale à celle de la section du piston 2. Aussi, lorsque le piston 2 pénètre ou s'extrait dans la chambre d'essai 5, il ne provoque pas l'augmentation ou la diminution de la pression à l'intérieur de la chambre 5 par la modification de son volume.

Tel qu'illustré à la figure 1, le piston 2 est inséré dans le couvercle 27 en dévissant une chape 52 dudit couvercle 27. Cette chape 52 et la partie inférieure du couvercle 27 sont fixées de manière étanche grâce à des joints assurant notamment l'étanchéité de la chambre annulaire supérieure 30.

Le piston 2 dépasse du couvercle pour coopérer avec un piston auxiliaire 41 d'un module 40 fixé de manière amovible audit couvercle. Ce module 40 permet notamment de rendre autonome la cellule.

Toutefois, il est à noter que ce piston auxiliaire 40 n'étant pas solidaire du piston 2 n'est d'aucune utilité dans le cas d'essais en traction. Il peut s'avérer néanmoins utile dans le cas d'essais cycliques où l'échantillon est successivement étiré puis compressé.

Le module 40 comprend un alésage présentant une section de guidage du piston auxiliaire 41 ainsi qu'un alésage de plus grand diamètre ajusté pour coopérer de manière étanche avec une collerette 42 dudit piston auxiliaire 41 en délimitant deux chambres annulaires, respectivement inférieure et supérieure.

La chambre annulaire supérieure sera notamment reliée à un canal permettant l'introduction d'un fluide afin d'exercer une poussée sur le piston tendant à compresser l'échantillon. Il est à noter que la tige du piston auxiliaire 41 peut également dépasser du module 40 permettant notamment de coupler la cellule à une machine d'essais de laboratoire, ou encore d'effectuer une mesure de déplacement externe.

Nous décrivons dans la suite le montage de l'échantillon permettant de réaliser les essais en traction.

En se rapportant aux figures, l'échantillon 3 de forme cylindrique est assujetti par collage 19 à ses extrémités respectivement, d'une part, à un plateau inférieur destiné à être assujetti à l'embase inférieure 24 de ladite cellule et, d'autre part, à un plateau supérieur destiné à être assujetti au piston 2 qui fait saillie vers le bas à l'intérieur de la chambre d'essai 5.

Les plateaux inférieur et supérieur peuvent être pourvus de moyens de drainage pour soumettre l'échantillon 3 au passage longitudinal d'un fluide de drainage. La cellule comprend à cet effet au moins un circuit repéré 20 pour la circulation du fluide de drainage.

Les plateaux inférieur et supérieur constituent ainsi des embases drainantes 21, 22 comportant notamment un alésage 23 pour le passage du fluide de drainage. L'embase de drainage supérieure 21 est solidaire d'une demi-coque 11 apte à coopérer de manière amovible avec une demi-coque correspondante 10 fixée notamment par vissage au piston 2.

L'embase drainante inférieure 22 est quant à elle solidaire d'une demi-coque 12 apte à coopérer de manière amovible avec une demi-coque correspondante 13 fixée à l'embase inférieure 24, notamment par vissage. Lorsque le piston 2 est actionné à la descente vers l'échantillon, les paires de demi-coques forment chacune une coque dont le volume interne constitue la chambre 14 de mise en dépression. Le circuit 15 permet la mise sous vide desdites chambres dites de mise en dépression, réalisent ainsi l'assujettissement sous traction.

La cellule, conforme à l'invention, permet avantageusement de soumettre l'échantillon cylindrique 3 à des conditions de traction selon l'axe longitudinal de l'échantillon. La paroi latérale de l'échantillon peut quant à elle subir une contrainte radiale sous l'action du fluide dit de pression et soumettre ainsi l'échantillon à différentes conditions de confinement.

Il est à noter toutefois que la cellule permet également des essais de traction simple, sans contrainte sur la paroi latérale. La différence de pression qui règne entre le volume intérieur des coques, dans la chambre dite de mise en dépression, et celle de la chambre d'essais 5 soumise à la pression atmosphérique, permet alors d'obtenir la différence de pression nécessaire à l'assujettissement.

L'exemple ci-dessus décrit présente quatre demi-coques coopérant deux par deux pour assujettir sous traction l'échantillon, supérieurement et inférieurement à l'échantillon, respectivement avec le piston et l'embase de la cellule.

L'assujettissement peut être obtenu seulement une fois la cellule fermée par la mise en dépression des deux coques formées.

Une solution d'assujettissement à deux demi-coques seulement est possible. Par exemple, le piston de la cellule et l'extrémité supérieure de l'échantillon sont assujettis sous traction, grâce à deux demi-coques, comme dans l'exemple ci-dessus décrit. En revanche, l'extrémité inférieure de l'échantillon et l'embase de la cellule peuvent être assujettis sous traction par tout moyen de fixation amovible généralement connus, tel que par exemple grâce à un système à boulons.

Dans ce cas, l'assujettissement inférieur est réalisé lorsque la cellule est ouverte, ce qui autorise un vissage par exemple. La cellule est ensuite fermée (avec le corps et le couvercle). Le piston est actionné vers le bas jusqu'à ce que les deux demi-coques formant une coque étanche. Enfin, l'assujettissement supérieur est obtenu par la mise en dépression de la coque étanche.

## Revendications

1. Cellule (1) triaxiale d'essais de géomatériaux sur des échantillons, par exemple, de roche, de sols ou de matériaux fabriqués, comprenant :
- au moins un piston (2) pour soumettre un échantillon (3) à une contrainte dirigée selon l'axe longitudinal de l'échantillon,
- des moyens hydrauliques pour soumettre la paroi latérale de l'échantillon (3) à une contrainte, sous la pression d'un fluide,
- lesdits moyens hydrauliques comprenant au moins une chambre d'essai (5), étanche, à l'intérieur de laquelle est introduit l'échantillon (3), et un circuit de mise sous pression et de vidange contrôlée de ladite chambre d'essai avec un fluide, dit de pression,
- ladite cellule présentant des moyens (7) d'assujettissement de l'échantillon sous traction, prévus pour le solidariser de manière amovible entre deux pièces d'attaches (8, 9) destinées à s'écarter ou se rapprocher l'une de l'autre sous l'action dudit au moins un piston (2), afin de soumettre ledit échantillon à ladite contrainte d'axe longitudinal ou au contraire de le décharger, et ladite cellule étant **caractérisée en ce que**
- lesdits moyens (7) d'assujettissement comprennent au moins, d'une part, deux demi-coques (10, 11 ; 12, 13), situées dans ladite chambre d'essai (5), solidaires respectivement de deux éléments à assujettir l'un à l'autre de manière amovible, lesdites deux demi-coques étant aptes à être mises en contact lorsque lesdites pièces d'attache (8, 9) sont rapprochées de telle façon à constituer une coque étanche dont le volume interne constitue une chambre (14) de mise en dépression, et d'autre part, un circuit (15) pour la mise sous vide de ladite chambre (14) de mise en dépression.

2. Cellule selon la revendication 1, dans laquelle les deux demi-coques (10, 11 ; 12, 13) présentent respectivement deux bords (16, 17) de contour fermé destinés à coopérer mutuellement de manière étanche, le cas échéant, via un joint (18).

3. Cellule selon la revendication 2, dans laquelle l'échantillon (3) est cylindrique, le diamètre maximal de ladite coque étant supérieur au diamètre dudit échantillon.

4. Cellule selon l'une des revendications 1 à 3, dans laquelle l'une (10) des demi-coques est assujettie à l'une des pièces d'attache qui est constituée par ledit au moins un piston (2), l'autre (11) demi-coque étant assujettie directement ou indirectement par collage (19) à l'une des extrémités de l'échantillon.

5. Cellule selon l'une des revendications 1 à 3, l'une (13) des demi-coques est assujettie à l'une des pièces d'attache en liaison rigide avec le bâti de la machine, l'autre (12) demi-coque correspondante étant assujettie directement ou indirectement par collage (19) à l'une des extrémités de l'échantillon.

6. Cellule selon l'une des revendications 1 à 3 présentant quatre demi-coques (10, 11 ; 12, 13) aptes à coopérer deux à deux entre elles, et dans laquelle, d'une part, l'une (10) des demi-coques est assujettie à l'une des pièces d'attache qui est constituée par ledit au moins un piston (2), la demi coque correspondante (11) étant assujettie directement ou indirectement par collage (19) à l'une des extrémités de l'échantillon (3), et d'autre part, l'une (13) des autres demi-coques est assujettie à l'autre pièce d'attache en liaison rigide avec le bâti de la cellule, la demi-coque correspondante (12) étant assujettie directement ou indirectement par collage (19) à l'autre des extrémités de l'échantillon.

7. Cellule selon l'une des revendications 1 à 6 présentant des moyens de drainage pour soumettre l'échantillon (3) au passage longitudinal d'un fluide de drainage, comprenant au moins un circuit (20) pour la circulation d'un fluide de drainage.

8. Cellule selon la revendication 7, dans laquelle l'une (11 ; 13) au moins des demi-coques est en liaison rigide avec une embase drainante (21 ; 22) comportant un alésage (23) pour le passage d'un fluide de drainage.

9. Cellule triaxiale selon l'une des revendications 1 à 8, dans laquelle l'échantillon (3) est contraint axialement entre deux pièces d'attache (8, 9), qui sont constituées respectivement par une embase inférieure (24) et ledit piston (2),
laquelle cellule comprenant un corps (25) présentant une cavité formant ladite chambre d'essai (5), à l'intérieur de laquelle est logé l'échantillon (3), ledit corps (25) réservant entre sa paroi latérale et celle de l'échantillon une chambre périphérique reliée audit circuit de mise en pression et de vidange contrôlée,
ledit piston (2) étant guidé dans un alésage (26) de la paroi supérieure du corps, laquelle paroi fait partie intégrante du corps ou se présente sous la forme d'un couvercle (27) rapporté et fixé de manière démontable,
ledit alésage (26) de la partie supérieure du corps comprenant une section de guidage dudit piston et une section sur laquelle l'alésage est de plus grand diamètre, ajusté pour coulisser de manière étanche avec une collerette (28) dudit piston (2), notamment via un joint, en délimitant deux chambres annulaires (29, 30), respectivement inférieure et supérieure, un canal permettant l'introduction d'un fluide dans la chambre annulaire inférieure (29) afin d'exercer une poussée sur ledit piston, tendant à étirer l'échantillon.

10. Cellule selon la revendication 9, dans laquelle le piston (2) présente un canal (31) de compensation qui met en communication le fluide dit de pression de la chambre d'essai (4) et celui de ladite chambre annulaire supérieure (30).

## Patentansprüche

1. Dreiachsige Zelle (1) von Geomaterialtests an Proben, beispielsweise Felsen, Böden oder hergestellten Materialien, umfassend:
- mindestens einen Kolben (2), um eine Probe (3) einer Spannung zu unterziehen, die entlang der Längsachse der Probe ausgerichtet ist,
- hydraulische Mittel, um die Seitenwand der Probe (3) einer Spannung unter dem Druck eines Fluids zu unterziehen,
- wobei die hydraulischen Mittel mindestens eine dichte Testkammer (5), in die die Probe (3) eingeführt wird, und eine Schaltung zur Unterdrucksetzung und kontrollierten Entleerung der Testkammer mit einem so genannten Druckfluid umfassen,
- wobei die Zelle Mittel (7) aufweist, um die Probe unter Zug zu befestigen, die dazu vorgesehen sind, sie lösbar zwischen zwei Befestigungsteilen (8, 9) zu befestigen, die dazu bestimmt sind, sich unter der Wirkung des mindestens einen Kolbens (2) voneinander zu entfernen oder einander anzunähern, um die Probe der Längsachsenspannung zu unterziehen oder hingegen von dieser zu entlasten, und wobei die Zelle **dadurch gekennzeichnet ist, dass**:
- die Mittel (7) zur Zugbefestigung einerseits mindestens zwei Halbschalen (10, 11; 12, 13), die in der Testkammer (5) angeordnet sind und jeweils mit zwei lösbar aneinander zu befestigenden Elementen verbunden sind, wobei die beiden Halbschalen darauf ausgelegt sind, in Kontakt gebracht zu werden, wenn die Befestigungsteile (8, 9) angenähert sind, um eine dichte Schale zu bilden, deren Innenvolumen eine Kammer (14) zur Erzeugung eines Unterdrucks darstellt, und andererseits eine Leitung (15) umfassen, um die Kammer (14) zur Erzeugung eines Unterdrucks unter Vakuum zu setzen.

2. Zelle nach Anspruch 1, bei der die beiden Halbschalen (10, 11; 12, 13) jeweils zwei Ränder (16, 17) mit geschlossener Kontur aufweisen, die dazu bestimmt sind, wechselseitig dicht, gegebenenfalls über eine Dichtung (18), zusammenzuwirken.

3. Zelle nach Anspruch 2, bei der die Probe (3) zylindrisch ist, wobei der maximale Durchmesser der Schale größer als der Durchmesser der Probe ist.

4. Zelle nach einem der Ansprüche 1 bis 3, bei der die eine (10) der Halbschalen an einem der Befestigungsteile, das von dem mindestens einen Kolben (2) gebildet ist, befestigt ist, wobei die andere (11) Halbschale direkt oder indirekt durch Kleben (19) an einem der Enden der Probe befestigt ist.

5. Zelle nach einem der Ansprüche 1 bis 3, wobei eine (13) der Halbschalen an einem der Befestigungsteile in starrer Verbindung mit dem Gehäuse der Maschine befestigt ist, wobei die andere (12) entsprechende Halbschale direkt oder indirekt durch Kleben (19) an einem der Enden der Probe befestigt ist.

6. Zelle nach einem der Ansprüche 1 bis 3, die vier Halbschalen (10, 11; 12, 13) aufweist, die ausgelegt sind, jeweils zu zweit zusammenzuwirken, und bei der einerseits eine (10) der Halbschalen an einem der Befestigungsteile, das von dem mindestens einen Kolben (2) gebildet ist, befestigt ist, wobei die korrespondierende Halbschale (11) direkt oder indirekt durch Kleben (19) an einem der Enden der Probe (3) befestigt ist, und bei der andererseits eine (13) der anderen Halbschalen an dem anderen Befestigungsteil in starrer Verbindung mit dem Gehäuse der Zelle befestigt ist, wobei die korrespondierende Halbschale (12) direkt oder indirekt durch Kleben (19) an dem anderen der Enden der Probe befestigt ist.

7. Zelle nach einem der Ansprüche 1 bis 6, die Drainagemittel aufweist, um die Probe (3) dem Längsdurchfluss eines Drainagefluids zu unterziehen, umfassend mindestens eine Leitung (20) für die Zirkulation eines Drainagefluids.

8. Zelle nach Anspruch 7, bei der mindestens eine (11; 13) der Halbschalen in starrer Verbindung mit einem Drainagesockel (21; 22) ist, umfassend eine Bohrung (23) für den Durchfluss eines Drainagefluids.

9. Dreiachsige Zelle nach einem der Ansprüche 1 bis 8, bei der die Probe (3) axial zwischen zwei Befestigungsteilen (8, 9) eingespannt wird, die von einem unteren Sockel (24) bzw. dem Kolben (2) gebildet sind,
wobei die Zelle einen Körper (25) umfasst, der einen Hohlraum aufweist, der die Testkammer (5) bildet, in der die Probe (3) angeordnet ist, wobei der Körper (25) zwischen seiner Seitenwand und jener der Probe einen Umfangsraum vorsieht, der mit der Leitung zur Unterdrucksetzung und kontrollierten Entleerung verbunden ist,
wobei der Kolben (2) in einer Bohrung (26) der oberen Wand des Körpers geführt ist, welche Wand Bestandteil des Körpers ist oder in Form eines Deckels (27) vorhanden ist, der demontierbar aufgesetzt und befestigt ist,
wobei die Bohrung (26) des oberen Teils des Körpers einen Führungsabschnitt des Kolbens und einen Abschnitt umfasst, auf dem die Bohrung einen größeren Durchmesser hat, der dazu vorgesehen ist, dicht mit einem Kragen (28) des Kolbens (2) insbesondere über eine Dichtung zu gleiten, wobei zwei ringförmige Kammern (29, 30), eine untere bzw. obere, begrenzt werden, wobei ein Kanal die Einleitung eines Fluids in die untere ringförmige Kammer (29) ermöglicht, um einen Schub auf den Kolben auszuüben, der dazu neigt, die Probe auseinanderzuziehen.

10. Zelle nach Anspruch 9, bei der der Kolben (2) einen Ausgleichskanal (31) aufweist, der das so genannte Druckfluid der Testkammer (4) mit jenem der oberen ringförmigen Kammer (30) in Verbindung bringt.

## Claims

1. A triaxial cell for the testing of geomaterials on specimens, for instance specimens of rock, ground or manufactured materials, including:
- at least one piston (2) for subjecting a specimen (3) to a stress directed along the longitudinal axis of the specimen,
- hydraulic means for subjecting the lateral wall of the specimen (3) to a stress, under the pressure of a fluid,
- said hydraulic means comprising at least one sealed test chamber (5) inside which the specimen is placed (3), and a circuit for pressurising and controlled draining of said test chamber with a fluid, called the pressurising fluid,
- said cell exhibiting means (7) for subjecting the specimen to a tensile force, provided for removably fastening it between two attachments (8, 9) intended to move apart or closer together under the action of said at least one piston (2) so as to subject said specimen to said longitudinal stress or on the contrary to remove the load therefrom, and,
- said cell being **characterized in that** subjecting means (7) include at least, on the one hand, two half-shells (10,11;12,13), situated in said test chamber (5), respectively interconnected with two elements to be subjected to one another removably, wherein both said half-shells can be contacted when said attachments (8, 9) are brought closer in order to form a sealed shell whereof the internal volume constitutes a depressurising chamber (14), and on the other hand, a circuit (15) for putting under vacuum said depressurising chamber (14).

2. A cell according to claim 1, wherein both half-shells (10, 11; 12, 13) respectively present two edges (16, 17) with closed periphery intended for co-operating mutually in a leakproof manner, possibly, via a seal (18).

3. A cell according to claim 2, wherein the specimen (3) is cylindrical, the maximum diameter of said shell being greater than the diameter of said specimen.

4. A cell according to any of the claims 1 to 3, wherein one (10) of the half-shells is subjected to one of the attachments which is formed by said at least one piston (2), wherein the other (11) half-shell is subjected directly or indirectly by gluing (19) to one of the ends of the specimen.

5. A cell according to any of the claims 1 to 3, wherein one (10) of the half-shells is subjected to one of the attachments which is formed by said at least one piston (2), wherein the other (11) half-shell is subjected directly or indirectly by gluing (19) to one of the ends of the specimen.

6. A cell according to any of the claims 1 to 3 exhibiting four half-shells (10, 11; 12, 13) capable of co-operating two by two relative to one another, and wherein, on the one hand, one (10) of the half-shells is subjected to one of the attachments which is formed by said at least one piston (2), the corresponding half-shell (11) being subjected directly or indirectly by gluing (19) to one of the ends of the specimen (3) and, on the other hand, one (13) of the other half-shells is subjected to the other attachment rigidly connected with the stand of the cell, wherein the corresponding half-shell (12) is subjected directly or indirectly by gluing (19) to the other end of the specimen.

7. A cell according to any of the claims 1 to 6 exhibiting draining means for subjecting the specimen (3) to the longitudinal passage of a draining fluid, comprising at least one circuit (20) for the circulation of a draining fluid.

8. A cell according to claim 7, wherein one (11; 13) at least of the half-shells is rigidly connected with a draining mount (21; 22) including a bore (23) for letting through a draining fluid.

9. A triaxial cell according to any of the claims 1 to 8, wherein the specimen (3) is stressed axially between two attachments (8, 9), which are formed respectively by a lower mount (24) and said piston (2),
which cell comprising a body (25) having a cavity forming said test chamber (5) inside which the specimen (3) is accommodated, wherein said body (25) contains between its side wall and that of the specimen a peripheral chamber connected to said pressurising and controlled draining circuit,
said piston (2) being guided inside a bore (26) of the upper wall of the body, which wall is integral part of the body or is in the form of an added lid (27) and removably fastened,
said bore (26) of the upper portion of the body comprising a section for guiding said piston and a section whereon said bore has a greater diameter adjusted to slide in a leakproof manner with a flange (28) of said piston (2), especially via a seal, by delimiting two, respectively lower and upper, annular chambers (29, 30), wherein a channel allowing the insertion of a fluid into the lower annular chamber (29) in order to exert a thrust on said piston, for drawing the specimen.

10. A cell according to claim 9, wherein the piston (2) has a compensation channel (31) which communicates the so-called the pressurising fluid of the test chamber (4) and that of said upper annular chamber (30).
